(19) Europäisches Patentamt
European Patent Office
Office européen des brevets

(11) **EP 1 921 446 A2**

(12) **EUROPÄISCHE PATENTANMELDUNG**

(43) Veröffentlichungstag:
**14.05.2008 Patentblatt 2008/20**

(51) Int Cl.:
***G01N 31/10*** *(2006.01)*

(21) Anmeldenummer: **07019815.5**

(22) Anmeldetag: **10.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **13.11.2006 DE 102006053656**

(71) Anmelder: **KRONOS INTERNATIONAL, INC.**
**51373 Leverkusen (DE)**

(72) Erfinder: **Mersch, Frank**
**42799 Leichlingen (DE)**

(54) **Verfahren zur Bestimmung der Photoaktivität von im sichtbaren Licht photoaktiven Photokatalysatoren und Messapparatur hierfür**

(57) Die Erfindung betrifft ein standardisiertes Messverfahren zur Bestimmung der Photoaktivität von im sichtbaren Licht photokatalytisch wirkenden Materialien (vip-Materialien), insbesondere von vlp-Titandioxid sowie eine Messapparatur hierfür.

Das vip-Material wird in der Lösung einer Testsubstanz, z.B. 4-Chlorphenol suspendiert, mit blau emittierenden Leuchtdioden (LED) belichtet und der Abbau der Testsubstanz wird über die Zeit gemessen. Die Messzelle ist so eingerichtet, dass eine Temperaturkonstanz für die LED-Belichtungsquelle und die Probe gewährleistet ist. Beispielsweise werden die LED mit maximal 50% der zulässigen Stromstärke betrieben.

Das Messverfahren ist schnell und reproduzierbar durchführbar. Die Messapparatur ist kostengünstig und leicht zu transportieren

**Figur 1**

(a: 0,74, Bestimmheitsmaß: 0,99)

EP 1 921 446 A2

**Beschreibung**

Gebiet der Erfindung

Die Erfindung betrifft ein standardisiertes Messverfahren zur Bestimmung der Photoaktivität von im sichtbaren Licht photokatalytisch wirkenden Materialien, welches auf dem Einsatz von blau emittierenden Leuchtdioden (blaue LED) beruht, sowie eine Messapparatur hierfür.

Technologischer Hintergrund der Erfindung

Im sichtbaren Licht photokatalytisch wirkende (vip) Materialien, insbesondere entsprechend hergestelltes Titandioxid sind bekannt und finden in vielen Produkten Anwendung, beispielsweise in Farben und anderen Beschichtungen.
Die photokatalytische Wirksamkeit - im Folgenden als Photoaktivität bezeichnet - hängt im Falle von Titandioxid u.a. von der speziellen chemischen Zusammensetzung und der Phasenzusammensetzung, der Korngröße und den Herstellbedingungen ab. Für den Vergleich verschiedener Produkte als auch für Produktionskontrolle, Qualitätssicherung und Produktentwicklung ist ein standardisiertes Messverfahren für die Photoaktivität des Photokatalysators erforderlich, das einfach, schnell und zuverlässig durchgeführt werden kann.

Üblicherweise wird die Photoaktivität über die Zersetzungsrate organischer Substanzen wie z. B. 4-Chlorphenol, Isopropanol, Aceton oder Benzol charakterisiert. In der WO 2005/108505 A1 wird ein Messverfahren beschrieben, bei dem im Sichtbaren photokatalytisches $TiO_2$ (vlp-$TiO_2$) in einer 4-Chlorphenol-Lösung dispergiert wird und die Suspension anschließend mit Licht einer Halogenlampe bestrahlt wird, wobei Wellenlängen < 455 nm herausgefiltert werden. Die Abnahme der Konzentration an 4-Chlorphenol wird zeitabhängig mittels separater UV-Spektroskopie verfolgt.
vlp-$TiO_2$ zeigt gegenüber $TiO_2$, das im sichtbaren Licht nicht photoaktiv ist, eine erhöhte Lichtabsorption im violetten bis roten Spektralbereich (400 bis 650 nm). Insofern wird eine bevorzugte Verwendung von blauen Leuchtdioden (light emitting diode LED) zur Aktivierung des vlp-$TiO_2$ beschrieben in: Chia-Hsiang Lee, "Treatment of Volatile Organic Compound from Indoor Pollution Source Using Modified Photocatalyst-with LED", 2006 (Abstract veröffentlicht in: Electronic Theses & Dissertations Service, (http://etds.lib.ntu.edu.tw/etdservice/view_ metadata? etdun=U0001-0707200611085400&-from=DEPT&deptid=D0001003005).

Aufgabenstellung und Kurzbeschreibung der Erfindung

Der Erfindung liegt die Aufgabe zugrunde, ein standardisiertes Messverfahren für die Photoaktivität von vip-Materialien zu schaffen, das schnell, ohne aufwendige Präparationen und reproduzierbar durchzuführen ist.
Der Erfindung liegt weiterhin die Aufgabe zugrunde, eine kleine, transportable und kostengünstige Messapparatur bereit zu stellen, die einfach zu bedienen ist und die eine Temperaturkonstanz für die LED-Belichtungsquelle und die Probe gewährleistet.

Die Aufgabe wird gelöst durch ein Verfahren zur Messung der Photoaktivität von vlp-Material, wobei das vlp-Material mit blauen Leuchtdioden (LED) belichtet wird,
dadurch gekennzeichnet, dass eine Suspension des vlp-Materials in einer Testsubstanz-Lösung verwendet wird.
Die Aufgabe wird des weiteren gelöst durch eine Messapparatur zur Messung der Photoaktivität von vlp-Material, wobei das vlp-Material mit blauen Leuchtdioden (LED) in einer Messzelle belichtet wird, dadurch gekennzeichnet, dass die Messzelle mindestens 2 LED, eine Vorrichtung zur Aufnahme der zu vermessendem Probe in Form einer Suspension und mindestens einen aktiven Kühlkörper enthält.

Weitere vorteilhafte Ausgestaltungen der Erfindung sind in den Unteransprüchen angegeben.

Beschreibung der Erfindung

Leuchtdioden zeichnen sich gegenüber anderen Lichtquellen dadurch aus, dass sie nahezu monochromatisches Licht und keine zusätzliche UV- und keine Infrarotstrahlung liefern. Hochleistungs-LED, die mit höherer Stromstärke betrieben werden, verlieren allerdings infolge schneller Erwärmung an Lichtleistung, so dass hier erhöhte Anforderungen an die Wärmeableitung entstehen. Hohe Temperaturen verringern auch die LED-Lebensdauer.

Mit dem erfindungsgemäßen Verfahren wird eine durch die Photoaktivität des vlp-Materials hervorgerufene Eigenschaftsänderung einer Testsubstanz zeitabhängig verfolgt. Dabei kann es sich um den Abbau einer organischen Testsubstanz handeln, wie 4-Chlorphenol, Aceton, Benzol etc. Weiterhin geeignet als Testsubstanz sind Farbstoffe, die an sich ausreichend lichtstabil sind, sich aber durch die Photoaktivität des vlp-Materials zersetzten oder verändern z.B. Methylenblau oder Resazurin.

Das erfindungsgemäße Verfahren zeichnet sich dadurch aus, dass das vlp-Material in einer Lösung der Testsubstanz suspendiert vorliegt. Die Belichtung (Aktivierung) des vlp-Materials erfolgt intensitäts- und temperaturkonstant sowie reproduzierbar, so dass die Methode absolute Werte der Photoaktivität liefert. Es sind somit keine Vergleichsmessungen erforderlich.
Die Messapparatur ist einfach zu bedienen, robust, kostengünstig und leicht zu transportieren. Sie kann im Labor wie auch "vor Ort" eingesetzt werden.

Effektive Wärmeableitung, konstante Intensität und Langlebigkeit der LED werden durch eine oder mehrere der folgenden Maßnahmen im Messzellen-Aufbau erreicht:

- Anstelle einer LED werden mehrere LED eingesetzt.
- Die LED werden mit maximal 50% der zulässigen Stromstärke betrieben.
- Die LED sind auf einem Kühlblech mit einem Lüfter fixiert.
- In der Messzelle befindet sich mindestens ein weiterer aktiver Kühlkörper, z.B. ein Lüfter.
- Die wärmeentwickelnde Leistungselektronik ist außerhalb der Messzelle untergebracht.

Die Probe des vlp-Materials liegt pulverförmig vor. In einer besonderen Ausformung des Verfahrens wird die Photoaktivität von vlp-$TiO_2$ bestimmt. Als Testsubstanz dient eine definierte wässrige 4-Chlorphenol-Lösung (4-CP). Das pulverförmige $TiO_2$ wird in der 4-CP-Lösung dispergiert. Die Suspension wird in der Messzelle insgesamt 90 Minuten mit 4 blauen Hochleistungs-LED (jeweils 1 Watt Maximalleistung) belichtet. Zu Beginn und jeweils nach 30 Minuten wird eine Probe der Suspension genommen, über einen 0,2 $\mu$m Membranfilter gereinigt und der Gehalt an 4-CP im UV/Vis-Spektrometer bestimmt.

Alternativ sind als Testsubstanz Farbsysteme einsetzbar, z.B. mit den Farbstoffen Methylenblau oder Resazurin. Die durch die Photoaktivität hervorgerufenen Farbwertänderungen können separat oder online gemessen werden und erlauben eine zeitliche Bestimmung des Abbaus und somit die Aktivitätsbestimmung.

Beispiel

Die Erfindung wird anhand des nachfolgenden Beispiels erläutert, ohne dass damit eine Einschränkung der Erfindung beabsichtigt ist.

Messapparatur:

Die Messapparatur besteht aus einer Messzelle mit 4 Hochleistungs-LED und einer Messküvette, sowie einem Magnetrührer und der separaten Leistungselektronik mit Timer. Die Stromversorgung erfolgt über ein Steckernetzteil.
Die Messzelle nimmt eine rechteckige ca. 100 ml Glas-Messküvette auf. Auf einer Seite der Messzelle sind 4 blaue Hochleistungs-LED (je 1 Watt Maximalleistung) auf einem Kühlblech mit Lüfter fixiert. Die LED werden über eine Konstantstromquelle mit 100 mA und zusätzlicher Spannungsbegrenzung versorgt. Sie emittieren mit 450 nm als Peakwellenlänge. An den 2 benachbarten Wänden der Messzelle befindet sich je ein weiterer Lüfter. Die Lüfter werden mit einer eigenen Spannungsversorgung betrieben. Die Messzelle steht auf einem Magnetrührer, so dass die vlp-Suspension während der Messung mit Hilfe eines Rührkreuzes gerührt werden kann. Mit dem Timer wird die LED-Belichtung für jeweils 30 min gestartet.
Die Temperatur eines schwarzen Temperaturfühlers in der Messküvette steigt während der 30minütigen Belichtung jeweils um knapp 2 °C und sinkt anschließend wieder ab, die Messzelle erwärmt sich somit nicht über Umgebungstemperatur.

Messverfahren:

300 mg vlp-$TiO_2$ werden in 100 g wässriger 0,1 mmol/l 4-CP-Lösung mit Hilfe eines Dispergiergeräts (z.B. T25 Ultra-Turrax der Fa. IKA Werke) 1 Minute dispergiert und anschließend 1 Stunde in Dunkelheit gerührt. Die Proben-Suspension wird dann dreimal 30 Minuten in der Messzelle belichtet und zu den Zeitpunkten 0, 30, 60 und 90 Minuten wird je eine 10 ml-Probe entnommen.
Die Proben werden über einen 0,2 $\mu$m Membranfilter filtriert. Der Gehalt an 4-CP wird in einem UV/Vis-Spektrometer bei 223 nm über eine Standardkalibrationsgerade gemessen. Parallel erfolgt eine Trübungskontrolle der Proben durch Messung der Extinktion bei 344 nm.

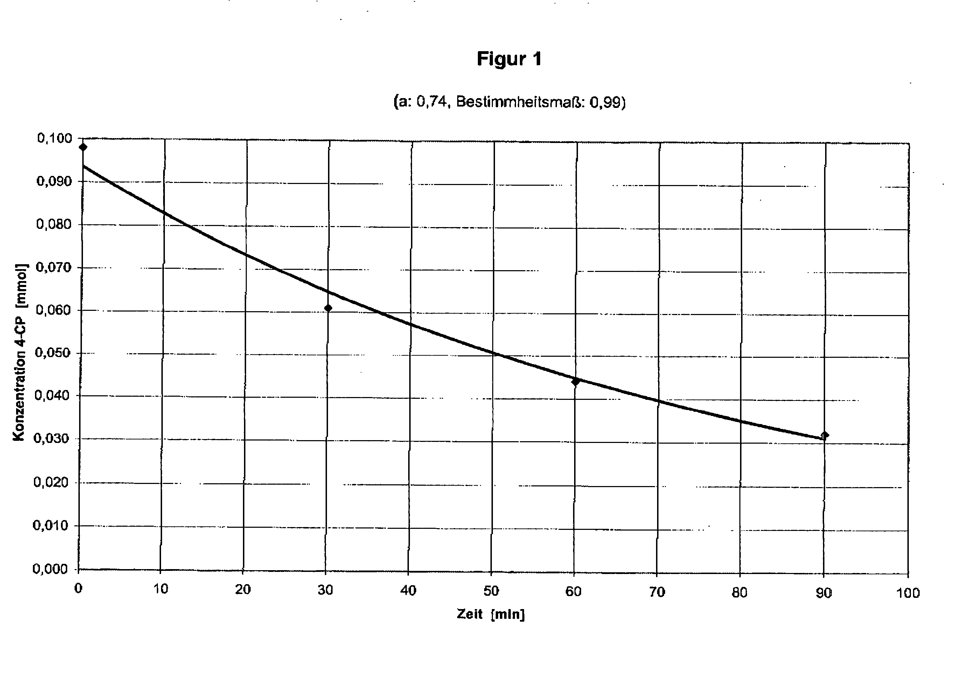

Die Abnahme der 4-CP-Konzentration in der Proben-Suspension (Figur 1) folgt sehr gut der Gleichung:

$$c(t) = c_0 \cdot e^{-a \cdot t}$$

t Zeit in Stunden
$C_0$ Anfangskonzentration
c(t) Konzentration zum Zeitpunkt t
a Faktor

Der Faktor a in [1/h] ist ein Maß für die Photoaktivität des vlp-Materials.

**Patentansprüche**

1. Verfahren zur Messung der Photoaktivität von vlp-Material, wobei das vlp-Material mit blauen Leuchtdioden (LED) belichtet wird,
**dadurch gekennzeichnet,**
**dass** eine Suspension des vlp-Materials in einer Testsubstanz-Lösung verwendet wird.

2. Verfahren nach Anspruch 1 **dadurch gekennzeichnet,**
**dass** das vlp-Material vlp-$TiO_2$ ist.

3. Verfahren nach Anspruch 1 oder 2 **dadurch gekennzeichnet,**
**dass** als Testsubstanz 4-Chlorphonol-Lösung verwendet wird.

4. Verfahren nach einem oder mehreren der Ansprüche 1 bis 3 **dadurch gekennzeichnet,**
**dass** die Leuchtdioden mit maximal 50% der zulässigen Stromstärke betrieben werden

**5.** Messapparatur zur Messung der Photoaktivität von vip-Material, wobei das vlp-Material mit blauen Leuchtdioden (LED) in einer Messzelle belichtet wird,
**dadurch gekennzeichnet,**
**dass** die Messzelle mindestens 2 LED, eine Vorrichtung zur Aufnahme der zu vermessenden Probe in Form einer Suspension und mindestens einen aktiven Kühlkörper enthält.

**6.** Messapparatur nach Anspruch 5 **dadurch gekennzeichnet,**
**dass** sich die Leistungselektronik außerhalb der Messzelle befindet

**7.** Messapparatur nach Anspruch 5 oder 6 **dadurch gekennzeichnet,**
**dass** die Leuchtdioden auf einem Lüfter fixiert sind.

**8.** Messapparatur nach einem der Ansprüche 5 bis 7 **dadurch gekennzeichnet, dass** 4 1-Watt-LED eingesetzt werden und an gegenüberliegenden Wänden zusätzliche Lüfter vorhanden sind.

**Figur 1**

(a: 0,74, Bestimmheitsmaß: 0,99)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005108505 A1

**In der Beschreibung aufgeführte Nicht-Patentliteratur**

- **CHIA-HSIANG LEE ; 2006.** Treatment of Volatile Organic Compound from Indoor Pollution Source Using Modified Photocatalyst-with LED. *Electronic Theses & Dissertations Service, http://etds.lib.ntu.edu.tw/etdservice/view_metadata?etdun=U0001-0707200611085400&from=DEPT&deptid=D0001003005*